# EUROPÄISCHE PATENTANMELDUNG

(11) **EP 4 289 878 A1**
(43) Veröffentlichungstag der Anmeldung: **13.12.2023**
(21) Anmeldenummer: 23177016.5
(22) Anmeldetag: 02.06.2023
(51) Int. Cl.: C08G 18/10, C08G 18/48, C08G 18/75, C08G 18/80, D06N 3/14

(54) **EIN-KOMPONENTENSYSTEM UMFASSEND BLOCKIERTE POLYURETHANPREPOLYMERE**

(30) Priorität: 08.06.2022 EP 22177717
(71) Anmelder: Evonik Operations GmbH, 45128 Essen (DE)
(72) Erfinder: Pukrop, Denis, 48249 Dülmen (DE); Nacke, Christoph, 46514 Schermbeck (DE); Herda, Silvia, 44623 Herne (DE); Spyrou, Emmanouil, 46514 Schermbeck (DE); Streukens, Guido, 42111 Wuppertal (DE)
(74) Vertreter: Evonik Patent Association

(57) **Zusammenfassung**

Gegenstand der vorliegenden Erfindung ist ein Ein-Komponentensystem umfassend
a) mindestens ein Polyurethanprepolymer auf Basis mindestens eines Di- und/oder Polyisocyanats und mindestens eines Di- und/oder Polyols, bei dem mindestens ein Di- oder Polyol ein Polyalkylenglykol mit einem zahlenmittleren Molekulargewicht von 900 bis 2.150 g/mol ist, bei dem alle nicht umgesetzten Isocyanatgruppen mit mindestens einem Malonsäureester blockiert sind, und
b) mindestens ein Di- und/oder Polyamin;
ein Verfahren zu seiner Herstellung, seine Verwendung und es einsetzende Verfahren zur Herstellung von Kunstleder und (Kunst)Lederbeschichtungen.

## Beschreibung

Die vorliegende Erfindung betrifft ein Ein-Komponentensystem, das zur Herstellung von Kunstledern und (Kunst)Lederbeschichtungen verwendet werden kann und ein Verfahren zu seiner Herstellung. Die Erfindung betrifft weiterhin die Verwendung des Ein-Komponentensystems zur Herstellung von Kunstledern oder (Kunst)Lederbeschichtungen und das Verfahren zur Herstellung eines Kunstleders oder einer (Kunst)Lederbeschichtung.

Kunstleder sind unter Verwendung von Kunststoffen hergestellte textile und andere flexible Flächengebilde mit oder ohne Deckschicht, die dem Verwendungszweck entsprechende z. T. lederähnliche Eigenschaften und/oder Oberflächengestaltung (z. B. Prägung) haben. Unter dem Begriff "Kunstleder" werden dabei insbesondere lederartige Werkstoffe umfassend mindestens eine Trägerschicht (z. B. aus Papier, Baumwolle oder Kunststoff, insbesondere Polyester) und mindestens eine flächig angebrachte (z.B. aufgebrachte) Kunststoffbeschichtung verstanden.

"(Kunst)Lederbeschichtungen" sind demgegenüber Kunststoffbeschichtungen, die zur Erzielung besonderer kunstledertypischer Eigenschaften entweder auf Naturleder oder auf Kunstleder aufgebracht werden können.

In der letzten Zeit hat sich herausgestellt, dass Kunststoffe, die auf Polyurethanprepolymeren, die mit mindestens difunktionellen Alkoholen und/oder Aminen vernetzt werden, basieren, zu besonders vorteilhaften Eigenschaften der daraus resultierenden Kunstleder und (Kunst)Lederbeschichtungen führen. Unter Polyurethanprepolymeren sind dabei aus Polyolen im Unterschuss und Di- oder Polyisocyanaten im Überschuss herstellbare oligomere oder polymere Isocyanat-terminierte Umsetzungsprodukte mit mindestens einer Urethanbindung zu verstehen. Da reine, aus Di- oder Polyisocyanat und Polyolkomponente hergestellte Polyurethanprepolymere mit den genannten Vernetzern bereits bei Raumtemperatur reagieren würden, müssen sie in getrennten Gebinden gelagert werden. Die zugehörige Technologie wird deswegen als ZweiKomponenten-Technologie bezeichnet.

JP 2014-105250 A offenbart eine Urethanprepolymer-Zusammensetzung enthaltend ein hydroxylgruppenhaltiges Urethanprepolymer, das aus 20 - 80 Gew.-% eines hydroxylterminierten Urethanprepolymers und 20 - 80 Gew.-% eines Oligomers, das keine Urethangruppe aufweist, hergestellt wurde. Die Zusammensetzung kann als Bestandteil eines Zwei-Komponentensystems mit entsprechenden Quervernetzern zu Kunstleder verarbeitet werden.

CN 102758359 A offenbart ein auf Zwei-Komponentensystemen basierendes Verfahren zur Herstellung einer Polyurethanschaumbeschichtung, bei dem zunächst eine untere Schaumschicht aus einer Polyurethankomponente A (einem Polyol oder Polyamin) und einer Polyurethankomponente B (einem diisocyanatbasierten Isocyanatmonomer oder einem Prepolymer eines Isocyanats und eines Polyols) hergestellt wird, die anschließend oben mit einer wasserbasierten Polyurethanzusammensetzung enthaltend ein wasserbasiertes Polyurethan und einen Quervernetzer (ein aliphatisches Epoxyharz oder ein Polyisocyanat) beschichtet wird. Die Polyurethanschaumbeschichtung kann als synthetisches Leder verwendet werden.

JP 2006-316127 A offenbart eine härtbare lösemittelfreie Urethanharzzusammensetzung enthaltend eine Verbindung mit aktiven Wasserstoffatomen und ein Polyisocyanat, wobei es sich bei letzterem um ein Addukt aus einem Glykol und einem Diisocyanat handelt. Mit der Zusammensetzung kann Kunstleder hergestellt werden.

EP 3 514 189 A1 offenbart ein Zwei-Komponentensystem, das zur Herstellung von Kunstleder geeignet ist. Die Polyolkomponente basiert auf einem Reaktionsprodukt eines Diisocyanats und eines Isocyanurats mit einer Polyolkomponente.

Da Zwei-Komponentensysteme den Nachteil aufweisen, schnell zu reagieren, müssen die beiden Komponenten getrennt gelagert werden. Weiterhin kann die Aushärtung in der Anlage teilweise in unerwünschter Weise erfolgen. Aus diesem Grund wurden Ein-Komponentensysteme entwickelt, bei denen die Isocyanatgruppen des Polyurethanprepolymers chemisch reversibel blockiert sind, so dass eine Umsetzung bei Raumtemperatur bereits bei Zugabe des Vernetzers vermieden wird. Gebräuchlich ist im Stand der Technik eine Blockierung der Isocyanatgruppen mit Oximen oder Lactamen.

So offenbart JP 2006-070059 A ein für die Verwendung in Ein-Komponentensystemen geeignetes, aus einem Polycarbonatdiol und einem organischen Diisocyanat hergestelltes Polyurethanprepolymer, dessen Isocyanatgruppen nachfolgend blockiert wurde. Bevorzugt wurde das Prepolymer mit einem Ketoxim oder Lactam blockiert.

Nachteilig an der Blockierung mit Ketoximen und Lactamen ist jedoch unter anderem, dass bei der Entblockierung toxische Nebenprodukte abgespalten werden.

Zur Lösung dieses Problems lehrt der Stand der Technik, alternativ Prepolymere mit Malonaten zu blockieren.

DE 196 22 136 A1 offenbart ein Verfahren zur Blockierung eines Isocyanats-Polyol-Prepolymers mit Malonat.

DE 11 2005 001 991 T5 offenbart ein auf TDI und einem Diol basierendes Prepolymer, das mit Diethylmalonat blockiert wurde.

US 4,240,943 A offenbart ein Urethanprepolymer auf Basis von Hexamethylendiisocyanat und einem Polyesterdiol, das nachfolgend mit Diethylmalonat blockiert wurde.

WO 2014/039306 A1 offenbart die Herstellung eines mit Diethylmalonat blockierten H12MDI-polyTHF-Prepolymers.

EP 3 712 188 A1 offenbart Polyisocyanat-Zusammensetzungen umfassend mindestens ein Diisocyanat, einen Polyol mit einem zahlenmittleren Molekulargewicht von 400 - 5.000 und einer durchschnittlichen Zahl an Hydroxygruppen von 3 bis 8, das mit einem Blockierungsmittel, bei dem es sich um ein Malonat handeln kann, umgesetzt sein kann.

US 5,863,983 offenbart ein Verfahren, bei dem (u. a. Sulfonat-blockierte Polyole) mit einem Isocyanat umgesetzt werden und nachfolgend eine Blockierung mit Malonat erfolgt.

Der Stand der Technik lehrt weiterhin die Umsetzung Malonat-blockierter Prepolymere mit Di- bzw. Polyolen.

US 4,518,522 A offenbart z. B. Prepolymere, die u. a. aus Polyalkylenglykolen mit unterschiedlichen zahlenmittleren Molekulargewichten und unterschiedlichen Diisocyanaten hergestellt werden.

DE 25 50 156 A1 offenbart Gemische blockierter Polyisocyanat, die aus Polyhydroxyverbindungen mit einem Molekulargewicht von 62 bis ca. 300 g/mol und einem Isocyanat und nachfolgender Blockierung mit z. B. Malonsäurediethylester herstellbar sind. Sie werden in Einbrennlacken eingesetzt und dabei mit Verbindungen mit mindestens zwei ggü. Isocyanatgruppen reaktiven Wasserstoffatomen mit einem Molekulargewicht von etwa 400 bis etwa 50.000 g/mol umgesetzt.

EP 3 689 936 A1 offenbart Beschichtungsmaterialien, die ein blockiertes Polyisocyanat und eine Polyhydroxyverbindung aufweisen können. Das blockierte Polyisocyanat kann durch Umsetzung mit einer hydrophilen Verbindung gebildete Urethaneinheiten aufweisen. Bei der hydrophilen Verbindung kann es sich um Polyetherpolyole auf Basis von Ethylenoxid handeln, die bevorzugt nicht mehr als 30 Ethylenoxid-Einheiten ausweisen.

EP 53 766 A1 offenbart Zusammensetzungen umfassend Präpolymere aus Isocyanaten und Polyolen, die mit Malonaten blockiert und mit Polyolen gehärtet werden. Mit den dort beschriebenen Systemen werden Überzüge hergestellt. Die Härtung mit Aminen wird dort als nachteilig dargestellt.

Im Stand der Technik wird weiterhin die Härtung Malonat-blockierter Prepolymere mit Aminen beschrieben. Die Härtung mit Aminen hat dabei den Vorteil, schneller und/oder ohne Katalysator durchführbar zu sein. Weiterhin weisen die üblichen zur Härtung geeigneten Di- und Polyole den Nachteil auf, hygroskopisch zu sein.

EP 3 348 593 A1 offenbart blockierte Polyisocyanate aus einem Diisocyanat und einem Malonsäurediester. Das Polyisocyanat kann über Umsetzung eines Diisocyanats mit einem zweibis sechswertigen Alkohol (z. B. Trimethylolpropan) hergestellt werden. Die Beschreibung offenbart die Verwendung der blockierten Polyisocyanate in 1K-Zusammensetzungen, die auch ein Polyamin umfassen können.

US 5,071,937 A offenbart Beschichtungszusammensetzungen, die ein mit Malonat blockiertes Isocyanat-Prepolymer aus einem Isocyanat und einem Polyol mit einem molekularen Gewicht von 400 - 10.000 g/mol sowie ein sterisch gehindertes aromatisches Polyamin aufweisen. Weiterhin wird ihre Verwendung zusammen mit den zu ihrer Herstellung eingesetzten Polyolen zur Herstellung von Beschichtungszusammensetzungen offenbart, die für unterschiedliche Zwecke eingesetzt werden können. Der Einsatz von aromatischen Aminen ist jedoch sowohl im Hinblick auf potentielle Gesundheitsrisiken als auch wegen resultierender negativer Eigenschaften der Beschichtungen nachteilig.

Der Stand der Technik offenbart weiterhin die Härtung Malonat-blockierter Prepolymere auf Basis von Polyethern und Isocyanaten mit Aminen.

US 4,439,593 A und US 4,677,180 A offenbaren Beschichtungszusammensetzungen, die ein mit Malonat blockiertes Prepolymer aus einem Isocyanat und einem Polyol aufweisen. Bei dem Polyol handelt es sich um eine Verbindung mit einem zahlenmittleren Molekulargewicht von 100 - 10.000 g/mol, bevorzugt 400 - 8.000 g/mol bzw. 800 - 8.000 g/mol. Bevorzugt ist die Verbindung ein Polyether. Die Beschichtungszusammensetzung kann weiterhin ein Diamin enthalten und für verschiedene Zwecke eingesetzt werden. Einsetzbare Amine schließen unter anderem Isophorondiamin und 4,4'-Diaminodicyclohexylmethan ein.

EP 0 034 272 offenbart ein Verfahren zur Herstellung von Flächengebilden mit velourartiger Oberfläche, bei dem eine Beschichtungspaste umfassend ein blockiertes NCO-Präpolymer und ein Polyamin eingesetzt wird. Die NCO-Präpolymere können aus hydroxylgruppenhaltigen Verbindungen mit einem Molekulargewicht von 500 - 10.000, bevorzugt 1000 - 6.000 g/mol und verschiedenen Diisocyanaten hergestellt sein. Bevorzugt werden Polypropylenoxid-Polyether mit einem mittleren Molekulargewicht von 1.000 - 6.000 g/mol. Die Blockierung kann u. a. mit Malonestern erfolgen, bevorzugt ist jedoch Butanonoxim.

WO 2017/107064 A1 offenbart eine für die Herstellung oder Beschichtung von u. a. Lederartikeln geeignete Zusammensetzung, die mindestens ein blockiertes Isocyanat-terminiertes Prepolymer (hergestellt aus einer Polyolkomponente und einer Isocyanatkomponente) und mindestens ein Polyamin aufweist. Die Polyolkomponente weist bevorzugt ein zahlenmittleres Molekulargewicht von 2.000 - 8.000 g/mol, weiter bevorzugt 2.500 - 7.000 g/mol und ganz besonders bevorzugt 3.000 - 6.500 g/mol auf. Sie kann ein Polyetherpolyol sein. Die Isocyanatkomponente kann ein aliphatisches oder aromatisches Polyisocyanat sein. Das Prepolymer kann u.a. mit Malonat blockiert sein.

Mit den im Stand der Technik beschriebenen 1K-Zusammensetzungen können jedoch keine Kunstleder und (Kunst)Lederbeschichtungen mit ausreichend guten Eigenschaften hergestellt werden. Insbesondere können mit den bislang bekannten 1K-Zusammensetzungen keine ausreichend guten Zugfestigkeiten und Dehnungswerte in Kombination mit guten E-Moduluswerten erreicht werden. Wünschenswert sind Zugfestigkeiten von 17 - 23 N/mm², Dehnungswerte von 600 - 900 Gew.-% und Elastizitätsmodulwerte von 2 - 4,5 MPa bei 100 %, 4 - 7 MPA bei 200 % und 5,5 - 10 MPa bei 300 % (alle Werte gemessen nach DIN EN ISO 527).

Aufgabe der vorliegenden Erfindung ist es somit, die Nachteile des Standes der Technik zu vermeiden. Insbesondere ist es Aufgabe der vorliegenden Erfindung, Ein-Komponentenzusammensetzungen bereitzustellen, die bei der Härtung keine toxischen Nebenprodukte abspalten und mit denen sich Kunstleder und (Kunst)Lederbeschichtungen mit guten Eigenschaften, insbesondere im Hinblick auf die zuvor genannten Parameter wie Zugfestigkeit, Dehnung und Elastizitätsmodule, herstellen lassen.

Diese Aufgabe wird gelöst durch das erfindungsgemäße Ein-Komponentensystem umfassend
a) mindestens ein Polyurethanprepolymer auf Basis mindestens eines Di- und/oder Polyisocyanats und mindestens eines Di- und/oder Polyols, wobei mindestens ein Di- oder Polyol ein Polyalkylenglykol mit einem zahlenmittleren Molekulargewicht von 900 - 2.150 g/mol ist, bei dem alle nicht umgesetzten Isocyanatgruppen des Polyurethanprepolymers mit mindestens einem Malonsäureester blockiert sind, und
b) mindestens ein Di- und/oder Polyamin.

a) Polyurethanprepolymer
   Unter einem Polyurethanprepolymer "auf Basis" mindestens eines Di- und/oder Polyisocyanats und mindestens eines Di- und/oder Polyols ist dabei ein aus mindestens einem Diol und/oder mindestens einem Polyol im Unterschuss und mindestens einem Diisocyanat und/oder mindestens einem Polyisocyanat im Überschuss herstellbares oligomeres oder polymeres Isocyanat-terminiertes Umsetzungsprodukt mit mindestens zwei Urethanbindungen (gebildet durch Umsetzung von jeweils einer Hydroxygruppe des mindestens einen Di- oder Polyols und jeweils einer Isocyanatgruppe des Di- oder Polyisocyanats) zu verstehen, dessen nicht umgesetzte terminale Isocyanatgruppen nachfolgend blockiert wurden. Die Blockierung der nicht umgesetzten Isocyanatgruppe(n) mit dem mindestens einen Malonsäureester erfolgt über eine Anbindung des CH-aciden, α-ständigen Kohlenstoffatoms des Malonsäureesters an das elektrophile Kohlenstoffatom der Isocyanatgruppe(n).

### Di-/Polyisocyanat

Prinzipiell basiert das Prepolymer auf einem oder mehreren Di- und/oder Polyisocyanaten. Besonders gute Eigenschaften resultieren jedoch, wenn es auf einem Di- oder Polyisocyanat basiert. Unter einem Polyisocyanat sind dabei Verbindungen mit mindestens drei Isocyanatgruppen zu verstehen.

Prinzipiell kann das Prepolymer auf mindestens einem Di- und/oder Polyisocyanat basieren. Besonders gute Eigenschaften werden jedoch mit mindestens einem Diisocyanat oder mindestens einem Polyisocyanat erzielt. Weiter bevorzugt basiert das Prepolymer auf einem Diisocyanat oder einem Polyisocyanat. Noch weiter bevorzugt basiert es auf einem Diisocyanat.

Bevorzugt basiert das Prepolymer auf mindestens einem (cyclo)aliphatischen Diisocyanat, d. h. mindestens einem Diisocyanat mit cyclisch und/oder aliphatisch gebundenen Isocyanatgruppen. Noch weiter bevorzugt basiert das Prepolymer auf einem (cyclo)aliphatischen Diisocyanat. Systeme auf Basis aromatischer Verbindungen (d. h. nicht (cyclo)aliphatische Verbindungen) führen zu nachteiligen Eigenschaften, insbesondere im Hinblick auf Vergilbung.

Weiter bevorzugt wird das mindestens eine Diisocyanat ausgewählt aus HDI (Hexamethylendiisocyanat), TMDI (ein Gemisch aus 2,2,4- und 2,4,4-Trimethyl-Hexamethylendiisocyanat), H12MDI (4,4'-Methylen-bis-(cyclohexylisocyanat)), IPDI (Isophorondiisocyanat), TMXDI (o-Tetramethylxylylendiisocyanat, m-Tetramethylxylylendiisocyanat, p-Tetramethylxylylendiisocyanat oder Gemische davon), XDI (o-Xylylendiisocyanat, m-Xylylendiisocyanat, p-Xylylendiisocyanat oder Gemische davon), MDI (Diphenylmethan-2,2'-Diisocyanat, Diphenylmethan-2,4'-Diisocyanat, Diphenylmethan-4,4'-Diisocyanat oder Gemische davon), TDI (Toluol-2,4-diisocyanat) Noch weiter bevorzugt wird das mindestens eine Diisocyanat ausgewählt aus HDI, TMDI, H12MDI und IPDI. Besonders gute Ergebnisse resultieren, wenn das eine Diisocyanat ausgewählt wird aus HDI, TMDI, H12MDI, IPDI, TMXDI, XDI, MDI und TDI. Ganz besonders gute Ergebnisse resultieren, wenn das eine Diisocyanat ausgewählt wird aus HDI, TMDI, H12MDI und IPDI (Isophorondiisocyanat). Die besten Ergebnisse resultieren, wenn das Diisocyanat IPDI ist.

Das Prepolymer kann auch auf mindestens einem Polyisocyanat basieren. Bevorzugt ist weiterhin, dass das Prepolymer auf mindestens einem, bevorzugt einem, Diisocyanat und mindestens einem, weiter bevorzugt einem, Polyisocyanat basiert. Besonders bevorzugt ist das Polyisocyanat ein von IPDI, HDI, H12MDI oder TDI abgeleitetes Polyisocyanat. Besonders bevorzugte Polyisocyanate sind die entsprechenden Isocyanurate, ganz besonders bevorzugt die Isocyanurate von IPDI und HDI.

Das Prepolymer basiert bevorzugt zu 0 - 40, weiter bevorzugt 0 - 30, noch weiter bevorzugt 0 - 20 Gew.-% Polyisocyanat, bezogen auf die Gesamtmasse an Di- und Polyisocyanat.

### Di-/Polyol

Prinzipiell basiert das Prepolymer auf einem Diol oder mehreren Diolen und/oder einem Polyol oder mehreren Polyolen. Besonders gute Eigenschaften resultieren jedoch, wenn es auf einem Di- oder Polyol oder in Summe zwei Di- oder Polyolen basiert. Unter einem Polyol sind dabei Verbindungen mit mindestens drei Hydroxygruppen zu verstehen. Besonders gute Eigenschaften werden mit mindestens einem Diol erzielt. Weiter bevorzugt basiert das Prepolymer auf einem oder zwei, weiter bevorzugt zwei, Diolen. Noch weiter bevorzugt basiert es zu 80 - 100 Gew.-% auf einem ersten Diol und zu 0 - 20 Gew.-% auf einem zweiten Diol, wobei die Gewichtsangaben bezogen sind auf die Gesamtmasse an Diolen. Ganz besonders bevorzugt basiert das Prepolymer auf zwei Diolen. Noch weiter bevorzugt basiert es zu 80 - 99,9 Gew.-%, noch weiter bevorzugt 80 - 95 Gew.-% auf einem ersten Diol und zu 0,1 - 20 Gew.-%, noch weiter bevorzugt zu 5 - 20 Gew.-% auf einem zweiten Diol, wobei die Gewichtsangaben bezogen sind auf die Gesamtmasse an Diolen.

Erfindungsgemäß ist mindestens ein Di- und/oder Polyol ein Polyalkylenglykol mit einem zahlenmittleren Molekulargewicht von 900 bis 2.150 g/mol, wobei das zahlenmittlere Molekulargewicht bestimmt wird gemäß DIN EN ISO 13885-1 mittels GPC und THF als Eluent. Wird nur ein Di- oder Polyol eingesetzt, basiert das Prepolymer somit ausschließlich auf dem Polyalkylenglykol mit einem zahlenmittleren Molekulargewicht von 900 bis 2.150 g/mol als Di- bzw. Polyol.

Wird mehr als ein Di- oder Polyol eingesetzt, beträgt der Anteil des Polyalkylenglykols, bezogen auf die Gesamtmasse anderer anwesender Di- und/oder Polyole bei der Herstellung des Polyurethanprepolymers, bevorzugt mindestens 50, weiter bevorzugt mindestens 60, noch weiter bevorzugt mindestens 70 Gew.-%. Bevorzugt ist der Polyalkylenglykol der erste Diol.

Besonders gute Ergebnisse werden erzielt, wenn der Polyalkylenglykol ein Polytetramethylenetherglykol (PolyTHF) ist. Noch weiter bevorzugt ist der erste Diol ein Polytetramethylenetherglykol.

Die besten Ergebnisse werden erzielt, wenn der Polytetramethylenetherglykol ein zahlengemitteltes Molekulargewicht von 950 - 2.100 g/mol aufweist. Entsprechende bevorzugte

Handelsprodukte sind polyTHF1000, polyTHF1800 und polyTHF2000 (BASF). Ganz besonders bevorzugt beträgt das zahlenmittlere Molekulargewicht 950 - 1.200 g/mol. Ein entsprechendes ganz besonders bevorzugtes Handelsprodukt ist polyTHF1000 (BASF).

Basiert das Prepolymer auf mehr als nur einem Di-/Polyol, wird zur Herstellung des Prepolymers nicht nur der Polyalkylenglykol, sondern noch mindestens ein weiterer, bevorzugt ein zweiter, Di- oder Polyol eingesetzt. Bevorzugt basiert das Prepolymer auf dem Polyalkylenglykol und einem weiteren Diol oder Polyol. Noch weiter bevorzugt basiert das Prepolymer auf dem Polyalkylenglykol und einem zweiten Diol.

Zur Erzielung guter Eigenschaften wird der weitere oder zweite Diol ausgewählt aus der Gruppe bestehend aus
- Hydroxyl-terminierten Polyesterdiolen, insbesondere Adipat-, Succinat- und Phthalat-Diolen, bevorzugt mit einem zahlengemittelten Molekulargewicht von 500 - 3.000 g/mol, besonders bevorzugt 1.000 - 2.000 g/mol,
- Hydroxyl-terminierten Polycarbonatdiolen, bevorzugt mit einem zahlenmittleren Molekulargewicht von 500 - 3.000, weiter bevorzugt 1.000 - 2.000 g/mol,
- Hydroxyl-terminierten Polycaprolactondiolen, bevorzugt mit einem zahlenmittleren Molekulargewicht von 500 - 3.000, weiter bevorzugt 1.000 - 2.000 g/mol und
- Kohlenwasserstoffdiolen mit zwei bis zehn Kohlenstoffatomen.

Ganz besonders bevorzugt ist der weitere bzw. zweite Diol ein Kohlenwasserstoffdiol mit zwei bis zehn Kohlenstoffatomen. Weiter bevorzugt basiert das Prepolymer auf einem Kohlenwasserstoffdiol ausgewählt aus Ethylenglykol, n-Propylenglykol, i-Propanglykol, 2-Methyl-1,3-Propandiol, n-Butylenglykol und n-Pentylglykol, n-Hexandiol, Diethylenglykol, 1,4-Cyclohexandimethanol, Tripropylenglykol und 1,10-Decandiol. Noch weiter bevorzugt basiert das Prepolymer auf einem Kohlenwasserstoffdiol ausgewählt aus Ethylenglykol, n-Propylenglykol, i-Propanglykol, 2-Methyl-1,3-Propandiol, n-Butylenglykol und n-Pentylglykol, n-Hexandiol. Besonders bevorzugt basiert das Prepolymer auf n-Butylenglykol.

Besonders bevorzugt basiert das Prepolymer auf einem Polytetramethylenetherglykol mit einem zahlengemittelten Molekulargewicht von 950 - 1200 g/mol und n-Butylenglykol.

### Malonsäureester

Da bei der Herstellung des Polyurethanprepolymers Di- oder Polyol im Unterschuss eingesetzt wird, verfügt das resultierende Zwischenprodukt über nicht umgesetzte Isocyanatgruppen. Diese wurden bei der Herstellung der Polyurethanprepolymers mit mindestens einem Malonsäureester blockiert. Dabei können die vormals freien Isocyanatreste sowohl mit Mono- als auch Dialkylmalonaten blockiert sein. Bevorzugt wird mit einem Malonsäureester blockiert. Noch weiter bevorzugt wird mit einem Malonsäureester ausgewählt aus Dimethylmalonat, Diethylmalonat, Diisopropylmalonat und Monoethylmalonat blockiert. Ganz besonders bevorzugt wird mit Diethylmalonat blockiert.

### Verfahren zur Herstellung des Prepolymers

Im Folgenden wird die Herstellung des im Ein-Komponentensystem enthaltenen Polyurethanprepolymers beschrieben. Bei dieser wird a) mindestens ein Di- und/oder Polyol mit mindestens einem Di- und/oder Polyisocyanat im Überschuss umgesetzt und nachfolgend b) nicht umgesetzte Isocyanatgruppen mit mindestens einem Malonsäureester blockiert.

Prinzipiell können ein oder mehrere Di- und/oder Polyisocyanate eingesetzt werden. Besonders gute Eigenschaften resultieren jedoch, wenn ein Di- oder Polyisocyanat eingesetzt wird. Unter einem Polyisocyanat sind dabei Verbindungen mit mindestens drei Isocyanatgruppen zu verstehen.

Prinzipiell kann mindestens ein Di- und/oder Polyisocyanat eingesetzt werden. Besonders gute Eigenschaften werden jedoch mit mindestens einem Diisocyanat oder mindestens einem Polyisocyanat erzielt. Noch bevorzugter wird ein Diisocyanat oder Polyisocyanat eingesetzt. Noch weiter bevorzugt wird ein Diisocyanat eingesetzt.

Ganz besonders bevorzugt wird mindestens ein (cyclo)aliphatisches Diisocyanat eingesetzt, d. h. mindestens ein Diisocyanat mit cyclisch und/oder aliphatisch gebundenen Isocyanatgruppen. Noch weiter bevorzugt wird ein (cyclo)aliphatisches Diisocyanat eingesetzt. Polymere auf Basis aromatischer Verbindungen haben nachteilige Eigenschaften, insbesondere im Hinblick auf Vergilbung in der späteren Anwendung.

Weiter bevorzugt wird das mindestens eine Diisocyanat ausgewählt aus HDI (Hexamethylendiisocyanat), TMDI (ein Gemisch aus 2,2,4- und 2,4,4-Trimethyl-Hexamethylendiisocyanat), H12MDI (4,4'-Methylen-bis-(cyclohexylisocyanat)), IPDI (Isophorondiisocyanat), TMXDI (o-Tetramethylxylylendiisocyanat, m-Tetramethylxylylendiisocyanat, p-Tetramethylxylylendiisocyanat oder Gemische davon), XDI (o-Xylylendiisocyanat, m-Xylylendiisocyanat, p-Xylylendiisocyanat oder Gemische davon), MDI (Diphenylmethan-2,2'-Diisocyanat, Diphenylmethan-2,4'-Diisocyanat, Diphenylmethan-4,4'-Diisocyanat oder Gemische davon), TDI (Toluol-2,4-diisocyanat). Noch weiter bevorzugt wird das mindestens eine Diisocyanat ausgewählt aus HDI, TMDI, H12MDI und IPDI. Besonders gute Ergebnisse resultieren, wenn das eine Diisocyanat ausgewählt wird aus HDI, TMDI, H12MDI, IPDI, TMXDI, XDI, MDI und TDI. Ganz besonders gute Ergebnisse resultieren, wenn das eine Diisocyanat ausgewählt wird aus HDI, TMDI, HMDI und IPDI. Die besten Ergebnisse resultieren, wenn das Diisocyanat IPDI ist.

Bei dem Verfahren kann auch mindestens ein Polyisocyanat eingesetzt werden. Bevorzugt ist weiterhin, dass bei dem erfindungsgemäßen Verfahren mindestens ein, bevorzugt ein, Diisocyanat und mindestens ein, weiter bevorzugt ein, Polyisocyanat eingesetzt wird. Besonders bevorzugt wird ein von IPDI, HDI, H12MDI oder TDI abgeleitetes Polyisocyanat eingesetzt. Besonders bevorzugte Polyisocyanate sind die entsprechenden Isocyanurate, ganz besonders bevorzugt die Isocyanurate von IPDI und HDI.

Bei dem Verfahren wird bevorzugt 0 - 40, weiter bevorzugt 0 - 30, noch weiter bevorzugt 0 - 20 Gew.-% Polyisocyanat, bezogen auf die Gesamtmasse an Di- und Polyisocyanat, eingesetzt.

Das Verfahren setzt neben dem mindestens einen Di- und/oder Polyisocyanat mindestens ein oder mehrere Diole und/oder ein oder mehrere Polyole ein. Besonders gute Eigenschaften resultieren jedoch, wenn ein Di- oder Polyol oder in Summe zwei Diole bzw. Polyole oder ein Gemisch aus einem Diol und einem Polyol eingesetzt wird. Unter einem Polyol sind dabei Verbindungen mit mindestens drei Hydroxygruppen zu verstehen. Besonders gute Eigenschaften werden mit mindestens einem Diol erzielt. Weiter bevorzugt werden ein bis zwei Diole eingesetzt. Ganz bevorzugt werden zwei Diole eingesetzt. Noch weiter wird 80 - 100 Gew.-% eines ersten Diols und 0 - 20 Gew.-% eines zweiten Diols eingesetzt, wobei die Gewichtsangaben bezogen sind auf die Gesamtmasse an Diolen. Ganz besonders bevorzugt basiert das Prepolymer auf zwei Diolen. Noch weiter bevorzugt wird 80 - 99,9 Gew.-%, noch weiter bevorzugt 80 - 95 Gew.-% eines ersten Diols und zu 0,1 - 20 Gew.-%, noch weiter bevorzugt zu 5 - 20 Gew.-% eines zweiten Diols eingesetzt, wobei die Gewichtsangaben bezogen sind auf die Gesamtmasse an Diolen.

Mindestens ein Di- und/oder Polyol ist ein Polyalkylenglykol mit einem zahlenmittleren Molekulargewicht von 900 bis 2.150 g/mol, wobei das zahlenmittlere Molekulargewicht bestimmt wird gemäß DIN EN ISO 13885-1 mittels GPC und THF als Eluent.

Wird mehr als ein Di- oder Polyol eingesetzt, beträgt der Anteil des Polyalkylenglykols, bezogen auf die Gesamtmasse anderer anwesender Di- und/oder Polyole bei der Herstellung des Polyurethanprepolymers, bevorzugt mindestens 50, weiter bevorzugt mindestens 60, noch weiter bevorzugt mindestens 70 Gew.-%.

Besonders gute Ergebnisse werden erzielt, wenn der Polyalkylenglykol Polytetramethylenetherglykol (PolyTHF) ist. Noch weiter bevorzugt ist Polytetramethylenetherglykol.

Die besten Ergebnisse werden erzielt, wenn der Polytetramethylenetherglykol ein zahlengemitteltes Molekulargewicht von 950 - 2.100 g/mol aufweist. Entsprechende bevorzugte Handelsprodukte sind polyTHF1000, polyTHF1800 und polyTHF2000 (BASF). Ganz besonders bevorzugt beträgt das zahlenmittlere Molekulargewicht 950 - 1.200 g/mol. Ein entsprechendes ganz besonders bevorzugtes Handelsprodukt ist polyTHF1000 (BASF).

Zur Herstellung von Prepolymer auf Basis von mehr als nur einem Di-/Polyol wird nicht nur der Polyalkylenglykol, sondern noch mindestens ein weiterer oder zweiter Di- oder Polyol, bevorzugt ein weiterer oder zweiter Diol eingesetzt.

Zur Erzielung guter Eigenschaften der resultierenden Prepolymere wird der weitere oder zweite Diol ausgewählt aus der Gruppe bestehend aus
- Hydroxyl-terminierten Polyesterdiolen, insbesondere Adipat-, Succinat- und Phthalat-Diolen, bevorzugt mit einem zahlengemittelten Molekulargewicht von 500 - 3.000 g/mol, besonders bevorzugt 1.000-2.000 g/mol,
- Hydroxyl-terminierten Polycarbonatdiolen, bevorzugt mit einem zahlenmittleren Molekulargewicht von 500 - 3.000, weiter bevorzugt 1.000 - 2.000 g/mol,
- Hydroxyl-terminierten Polycaprolactondiolen, bevorzugt mit einem zahlenmittleren Molekulargewicht von 500 - 3.000, weiter bevorzugt 1.000 - 2.000 g/mol und
- Kohlenwasserstoffdiolen mit zwei bis zehn Kohlenstoffatomen.

Besonders bevorzugt wird bei dem Verfahren als weiterer bzw. zweiter Diol ein Kohlenwasserstoffdiol mit zwei bis zehn Kohlenstoffatomen eingesetzt.

Weiter bevorzugt wird ein Kohlenwasserstoffdiol ausgewählt aus Ethylenglykol, n-Propylenglykol, i-Propanglykol, 2-Methyl-1,3-Propandiol, n-Butylenglykol und n-Pentylglykol, n-Hexandiol, Diethylenglykol, 1,4-Cyclohexandimethanol, Tripropylenglykol und 1,10-Decandiol eingesetzt. Noch weiter bevorzugt wird ein Kohlenwasserstoffdiol ausgewählt aus Ethylenglykol, n-Propylenglykol, i-Propanglykol, 2-Methyl-1,3-Propandiol, n-Butylenglykol und n-Pentylglykol, n-Hexandiol eingesetzt. Besonders bevorzugt wird n-Butylenglykol eingesetzt.

Ganz besonders bevorzugt werden bei Verfahren zwei Diole eingesetzt, und zwar ein Polytetramethylenetherglykol mit einem zahlengemittelten Molekulargewicht von 800 - 1200 g/mol und n-Butylenglykol.

Umsetzungsschritt a) kann bevorzugt in Abwesenheit eines Lösemittels und bei einer Temperatur von 40 - 80 °C, bevorzugt 50 - 70 °C, durchgeführt werden. Weiter bevorzugt wird Umsetzungsschritt a) in Gegenwart eines Katalysators durchgeführt, da so schnellere Reaktionszeiten und geringere Viskositäten erzielt werden können. Bevorzugte Katalysatoren können ausgewählt werden aus der Gruppe bestehend aus ggf. alkylsubstituierten Zinn-, Zink- und Bismutsalzen organischer Säuren. Ganz besonders bevorzugte Salze sind die ggf. alkylsubstituierten Acetate, Laurate und Stearate von Zinn, Zink und Bismut. Ganz besonders bevorzugt wird Umsetzungsschritt a) des erfindungsgemäßen Verfahrens mit Dibutylzinndilaurat oder Zinkoctoat durchgeführt.

Bei der Herstellung des Polyurethanprepolymers wird Di- oder Polyisocyanat im Überschuss eingesetzt. Insofern verfügt das resultierende Zwischenprodukt über nicht umgesetzte Isocyanatgruppen. Diese werden nun in Umsetzungsschritt b) mit mindestens einem Malonsäureester blockiert. Dabei können die vormals freien Isocyanatreste sowohl mit Mono- als auch Dialkylmalonaten blockiert werden. Bevorzugt wird mit einem Malonsäureester blockiert. Noch weiter bevorzugt wird mit einem Malonsäureester ausgewählt aus Dimethylmalonat, Diethylmalonat, Diisopropylmalonat und Monoethylmalonat blockiert. Ganz besonders bevorzugt wird mit Diethylmalonat blockiert.

Umsetzungsschritt b) kann bevorzugt in Abwesenheit eines Lösemittels und bei einer Temperatur von 60 - 100 °C, bevorzugt 70 - 90 °C durchgeführt werden. Weiter bevorzugt wird Umsetzungsschritt b) in Gegenwart eines Katalysators durchgeführt. Bevorzugte Katalysatoren können ausgewählt werden aus der Gruppe bestehend aus ggf. alkylsubstituierten Zinn-, Zink- und Bismutsalzen organischer Säuren. Ganz besonders bevorzugte Salze sind die ggf. alkylsubstituierten Acetate, Laurate, Stearate, Octoate, Neodecanoate, Acetoacetate, Oxalate, Adipate und Gluconate von Zinn, Zink und Bismut. Ganz besonders bevorzugt wird Umsetzungsschritt a) des erfindungsgemäßen Verfahrens mit Dibutylzinndilaurat oder Zinkoctoat durchgeführt.

Die in den Schritten a) und b) eingesetzten Katalysatoren können identisch oder unterschiedlich sein. Bevorzugt wird in den Schritten a) und b) derselbe Katalysator eingesetzt.

Die Katalysatormenge beträgt bevorzugt 0,1 - 10, bevorzugt 0,1 - 7 Gew.-%, bezogen auf die Gesamtmasse aller Komponenten.

Ganz besonders bevorzugt erfolgt die Umsetzung in Schritt a) bei Temperaturen von 50 - 70 °C innerhalb einer Stunde. Ganz besonders bevorzugt erfolgt die Umsetzung in Schritt b) so, dass der Malonsäureester bei 70 - 90 °C innerhalb eines Zeitfensters von bis zu einer Stunde zugegeben wird. Typische Reaktionszeiten betragen 5 - 10 h.

Besonders bevorzugt wird bei dem erfindungsgemäßen Verfahren in Schritt a) ein Gemisch bestehend aus

| | |
|---|---|
| 5 - 50 Gew.-% | IPDI, H12MDI, TMDI oder HDI, |
| 0 - 30 Gew.-% | Polyisocyanurat von IPDI, H12MDI, TMDI oder HDI, |
| 5 - 90 Gew.-% | Polytetramethylenetherglykol mit einem zahlengemittelten Molekulargewicht von 1000, 1800 oder 2000 g/mol (entsprechend den Handelsprodukten PolyTHF 100, PolyTHF1800 bzw. PolyTHF2000), |
| 0 - 50 Gew.-% | Butandiol und |
| 0,1 - 10 Gew.-% | Zinkoctoat |

umgesetzt. Prozentangaben beziehen sich hier auf die Gesamtmasse der Zusammensetzung. Im Anschluss kann bevorzugt

| | |
|---|---|
| 5 - 50 Gew.-% | Diethylmalonat (bezogen auf die Gesamtmasse von Zusammensetzung und Diethylmalonat) |

zugesetzt und Schritt b) durchgeführt werden.

Ganz besonders bevorzugt wird bei dem erfindungsgemäßen Verfahren in Schritt a) ein Gemisch bestehend aus

| | |
|---|---|
| 10 - 30 Gew.-% | IPDI, H12MDI, TMDI oder HDI, |
| 0 - 5 Gew.-% | Polyisocyanurat von IPDI, H12MDI, TMDI oder HDI, |
| 20 - 80 Gew.-% | Polytetramethylenetherglykol mit einem zahlengemittelten Molekulargewicht von 1000, 1800 oder 2000 g/mol, |
| 0 - 20 Gew.-% | Butandiol und |
| 0,1 - 7 Gew.-% | Zinkoctoat |

umgesetzt. Prozentangaben beziehen sich hier auf die Gesamtmasse der Zusammensetzung. Bevorzugt kann im Anschluss

| | |
|---|---|
| 5 - 25 Gew.-% | Diethylmalonat (bezogen auf die Gesamtmasse von Zusammensetzung und Diethylmalonat) |

zugesetzt und Schritt b) durchgeführt werden.

Noch weiter bevorzugt wird bei dem erfindungsgemäßen Verfahren in Schritt a) ein Gemisch bestehend aus

| | |
|---|---|
| 10 - 30 Gew.-% | IPDI, H12MDI, TMDI oder HDI, |
| 1 - 5 Gew.-% | Polyisocyanurat von IPDI, H12MDI, TMDI oder HDI, |
| 20 - 80 Gew.-% | Polytetramethylenetherglykol mit einem zahlengemittelten Molekulargewicht von 1000, 1800 oder 2000 g/mol, |
| 0 - 20 Gew.-% | Butandiol und |
| 0,1 - 7 Gew.-% | Zinkoctoat |

umgesetzt. Prozentangaben beziehen sich hier auf die Gesamtmasse der Zusammensetzung. Bevorzugt kann im Anschluss

| | |
|---|---|
| 5 - 25 Gew.-% | Diethylmalonat (bezogen auf die Gesamtmasse von Zusammensetzung und Diethylmalonat) |

zugesetzt und Schritt b) durchgeführt werden.

Gegenstand der vorliegenden Erfindung ist somit auch ein Kit, das ein Prepolymer, das nach einem der zuvor beschriebenen Verfahren erhältlich ist, umfasst.

### b) Di-/Polyamin

Das Ein-Komponentensystem weist mindestens ein Diamin und/oder Polyamin auf. Diamine weisen zwei Aminogruppen auf. Polyamine weisen drei oder mehr Aminogruppen auf. Bevorzugt weist es mindestens ein Diamin auf. Ganz besonders bevorzugt weist es ein Diamin auf. Noch weiter bevorzugt handelt es sich bei dem Diamin um ein (cyclo)aliphatisches Amin oder ein Polyetheramin.

Bevorzugt handelt es sich bei dem Diamin um Isophorondiamin (IPD), 4,4'-Diaminodicyclohexylmethan (PACM), 4,4'-Methylenbis(2-methylcyclohexanamin) (DMDC), ein Gemisch von 2,2,4- und 2,4,4-Trimethyl-Hexamethylendiamin (TMD), Hexandiamin (HDA), 1,3-Bis(aminomethyl)cyclohexan (1,3-BAC) und ein Polyoxypropylendiamin. Das Polyoxypropylendiamin ist vorzugsweise ein als D-230 bezeichnetes Polyoxypropylendiamin. Daher kann das Diamin bevorzugt aus der Gruppe bestehend aus Isophorondiamin (IPD), 4,4'-Diaminodicyclohexylmethan (PACM), 4,4'-Methylenbis(2-methylcyclohexanamin) (DMDC), ein Gemisch von 2,2,4- und 2,4,4-Trimethyl-Hexamethylendiamin (TMD), Hexandiamin (HDA), 1,3-Bis(aminomethyl)cyclohexan (1,3-BAC) und ein als D-230 bezeichnetes Polyoxypropylendiamin ausgewählt sein.

Gegenstand der vorliegenden Erfindung ist weiterhin ein Verfahren zur Herstellung des Ein-Komponentensystems, bei dem mindestens ein Polyurethanprepolymer auf Basis eines Polyalkylenglykols mit einem zahlenmittleren Molekulargewicht von 900 bis 2.150 g/mol und ggf. weiterer Di- und/oder Polyole, bei dem alle nicht umgesetzten Isocyanatgruppen des Polyurethanprepolymers mit mindestens einem Malonsäureester blockiert sind, und mindestens ein Di- und/oder Polyamin miteinander vermischt werden.

Gegenstand der vorliegenden Erfindung ist weiterhin die Verwendung des erfindungsgemäßen Polyurethanprepolymers zur Herstellung von Kunstledern oder (Kunst)Lederbeschichtungen.

Gegenstand der vorliegenden Erfindung ist weiterhin ein Verfahren zur Herstellung eines Kunstleders oder einer (Kunst)Lederbeschichtung, bei dem das erfindungsgemäße Ein-Komponentensystem eingesetzt wird. Besonders bevorzugt wird bei dem Verfahren ein Ein-Komponentensystem enthaltend genau ein Diamin oder Polyamin eingesetzt. Ganz besonders bevorzugt wird ein System enthaltend ein Diamin eingesetzt. Ganz besonders bevorzugt wird ein System enthaltend ein Polyurethanprepolymer und ein Diamin eingesetzt.

Das Verfahren zur Herstellung eines Kunstleders wird bevorzugt so durchgeführt, dass das Ein-Komponentensystem auf einen Träger aufgebracht und thermisch gehärtet wird. Während oder nach der thermischen Härtung kann weiterhin ein Prägeschritt zur Oberflächengestaltung vorgesehen sein. Bei dem Träger handelt es sich bevorzugt um einen faserförmigen Träger, bevorzugt einen Träger umfassend natürliche oder künstliche Fasern. Weiter bevorzugt handelt es sich bei dem Träger um Papier, Baumwolle oder Polyester.

Das Verfahren zur Herstellung einer (Kunst)Lederbeschichtung wird bevorzugt so durchgeführt, dass das Ein-Komponentensystem auf einen Stück Kunstleder oder Leder aufgebracht und thermisch gehärtet wird. Während oder nach der thermischen Härtung kann weiterhin ein Prägeschritt zur Oberflächengestaltung vorgesehen sein.

Da das Polyurethanprepolymer bei Raumtemperatur nicht mit dem mindestens einen Diamin und/oder Polyamin in dem Ein-Komponentensystem reagiert, kann das System gelagert werden.

### Beispiele:

### 1. Herstellung des Prepolymer

Zunächst wird das Prepolymer aus Isophorondiisocyanat und PolyTHF mit den in Tabelle 1 angegebenen Einwaagen durch Umsetzung in Gegenwart von 0,1 Gew.-% DBTL bei 60°C innerhalb einer Stunde hergestellt.

Anschließend wird das Diisocyanatprepolymer mit den in Tabelle 1 angegebenen Einwaagen an Diethylmalonat (erfindungsgemäße Beispiele) bzw. Caprolactam/MEK-Oxim (Vergleichsbeispiele) durch Umsetzung in Gegenwart von 2,0 Gew.-% Zinkoctoat bei 80 °C innerhalb von 8h hergestellt.

### 2. Kunstlederherstellung

Zur Herstellung einer (Kunst)Lederbeschichtung wird das erhaltene blockierte Prepolymer mit einem Diamin (PACM bzw. Isophorondiamin) und weiteren Komponenten mit Einwaagen gemäß Tabelle 1 in einem Labormischgerät bei einer Temperatur von 40 °C und einer Mischgeschwindigkeit von 1200 rpm vermischt.

Die Masse wird auf ein Releasesubstrat mit einem Schichtausstreicher aufgetragen und bei einer Temperatur von 120 bis 150 °C zur (Kunst)Lederbeschichtung gehärtet.

Die Prüfergebnisse der erhaltenen Beschichtungen sind in Tabelle 2 zusammengestellt. Nur Malonat-blockierte Prepolymere führen zu optimalen Beschichtungen im Hinblick auf die erzielten Werte für Zugfestigkeit, Dehnung und Elastizitätsmodul.

**Tabelle 1**

| Gew.-% | 1 | 2 | 3 | 4 | 5* | 6* | 7* | 8* | 9* |
|---|---|---|---|---|---|---|---|---|---|
| IPDI | 22,2 | 22,1 | 21,9 | 21,8 | 27,2 | 11,4 | 22,4 | 24,1 | 23,8 |
| PolyTHF 1000 | 48,7 | 48,4 | 48,0 | 47,0 | 37,8 | - | 54,8 | 52,8 | 52,1 |
| PolyTHF 650 | - | - | - | - | - | - | - | - | - |
| PolyTHF 3000 | - | - | - | - | - | 73,1 | - | - | - |
| PACM | 10,3 | 10,3 | 10,3 | - | 12,6 | 5 | 11,4 | 12,8 | 12,3 |
| IPDA | - | - | - | 12,3 | - | - | - | - | - |
| Diethylmalonat | 16,4 | 16,6 | 16,3 | 16,6 | 20,1 | 8 | - | - | - |
| MEK-Oxim | - | - | - | - | - | - | - | 9,8 | 9,6 |
| ε-Caprolactam | - | - | - | - | - | - | 11,3 | - | - |
| TIB Kat 218 | 0,1 | 0,1 | - | 0,1 | 0,1 | 0,1 | 0,1 | 0,1 | 0,1 |
| Coscat 83 | - | - | 0,1 | - | - | - | - | - | - |
| BorchiKat 22 | 1,8 | 1,8 | - | 1,7 | 1,7 | 1,9 | - | - | 1,7 |
| BorchiKat 0761 | - | - | 2,7 | - | - | - | - | - | - |
| Acetylaceton | - | 0,3 | 0,25 | - | - | - | - | - | - |
| Tegoglide B1484 | 0,5 | 0,5 | 0,5 | 0,5 | 0,5 | 0,5 | - | 0,5 | 0,5 |

| | | | | | | | | | |
|---|---|---|---|---|---|---|---|---|---|
| * = Nicht erfindungsgemäße Vergleichsbeispiele IPDI: Isophorondiisocyanat, Evonik Industries AG PolyTHF 1000: PolyTHF (Molmasse 1000 g/mol), BASF PolyTHF 650: PolyTHF (Molmasse 650 g/mol), BASF PolyTHF 3000: PolyTHF (Molmasse 3000 g/mol), BASF PACM: 4,4'-Diaminodicyclohexylmethan, Evonik Industries AG IPDA: Isophorondiamin, Evonik Industries AG Diethylmalonat: Merck MEK-Oxim und Acetylaceton: Merck ε -Caprolactam: BASF TIB Kat 218: TIB Chemicals Coscat 83: Erbslöh Borchikat 22 und 0761: Borchers Tegoglide B1484: Evonik Industries AG | | | | | | | | | |

**Tabelle 2**

| Meßparameter | Einheit | 1 | 2 | 3 | 4 | 5 | 6 | 7* | 8* | 9* |
|---|---|---|---|---|---|---|---|---|---|---|
| Schichtdicke | µm | 173 | 144 | 180 | 166 | 167 | 146 | 377 | 246 | 158 |
| Zugfestigkeit | N/mm² | 20,4 | 19,7 | 21,1 | 21,3 | 20,4 | 16,1 | 3,1 | 36,1 | 30,7 |
| Dehnung | % | 879 | 751 | 884 | 593 | 409 | 1900 | 206 | 863 | 792 |
| E-Modulus 100 % | Mpa | 2,7 | 2,8 | 2,8 | 4,4 | 7,3 | 0,7 | 2,5 | 7,6 | 7,6 |
| E-Modulus 200 % | Mpa | 4,2 | 4,6 | 4,1 | 6,5 | 11,1 | 1,1 | 3,2 | 9,7 | 9,6 |
| E-Modulus 300 % | Mpa | 5,7 | 6,4 | 5,4 | 9,1 | 15,6 | 1,3 | 0,0 | 12,4 | 12,1 |

| | | | | | | | | | | |
|---|---|---|---|---|---|---|---|---|---|---|
| Meßmethoden: Schichtdicke: DIN EN ISO 2360 Zugfestigkeit, Dehnung, E-Modulus 100 %, E-Modulus 200 %, E-Modulus 300 %: DIN EN ISO 527 | | | | | | | | | | |

## Patentansprüche

1. Ein-Komponentensystem umfassend
a) mindestens ein Polyurethanprepolymer auf Basis mindestens eines Di- und/oder Polyisocyanats und mindestens eines Di- und/oder Polyols,
wobei mindestens ein Di- oder Polyol ein Polyalkylenglykol mit einem zahlenmittleren Molekulargewicht von 900 bis 2.150 g/mol ist, bei dem alle nicht umgesetzten Isocyanatgruppen mit mindestens einem Malonsäureester blockiert sind, und
b) mindestens ein Di- und/oder Polyamin.

2. Ein-Komponentensystem nach Anspruch 1,
**dadurch gekennzeichnet, dass**
das Prepolymer auf einem Diisocyanat basiert.

3. Ein-Komponentensystem nach Anspruch 1 oder 2
**dadurch gekennzeichnet, dass**
das eine bzw. mindestens ein Diisocyanat ein (cyclo)aliphatisches Diisocyanat ist.

4. Ein-Komponentensystem nach einem der vorhergehenden Ansprüche,
**dadurch gekennzeichnet, dass**
das eine bzw. mindestens ein Diisocyanat ausgewählt wird aus HDI, TMDI, H12MDI, IPDI, TMXDI, XDI, MDI und TDI.

5. Ein-Komponentensystem nach Anspruch 4,
**dadurch gekennzeichnet, dass**
das eine bzw. mindestens ein Diisocyanat IPDI ist.

6. Ein-Komponentensystem nach einem der vorhergehenden Ansprüche,
**dadurch gekennzeichnet, dass**
das Prepolymer auf einem oder zwei, bevorzugt zwei, Diolen basiert.

7. Ein-Komponentensystem nach Anspruch 6,
**dadurch gekennzeichnet, dass**
das Prepolymer zu 80 - 100 Gew.-% auf einem ersten Diol und zu 0 - 20 Gew.-% auf einem zweiten Diol basiert, wobei die Gewichtsangaben bezogen sind auf die Gesamtmasse an Diolen.

8. Ein-Komponentensystem nach einem der vorhergehenden Ansprüche,
**dadurch gekennzeichnet, dass**
der Polyalkylenglykol ein Polytetramethylenetherglykol ist.

9. Ein-Komponentensystem nach Anspruch 8,
**dadurch gekennzeichnet, dass**
das zahlenmittlere Molekulargewicht des Polytetramethylenetherglykols 950 - 1.200 g/mol beträgt.

10. Ein-Komponentensystem nach einem der Ansprüche 7 - 9,
**dadurch gekennzeichnet, dass**
der zweite Diol ein Kohlenwasserstoffdiol mit zwei bis zehn Kohlenstoffatomen ist.

11. Ein-Komponentensystem nach Anspruch 10,
**dadurch gekennzeichnet, dass**
der Kohlenwasserstoffdiol ausgewählt aus der Gruppe bestehend aus Ethylenglykol, n-Propylenglykol, i-Propanglykol, 2-Methyl-1,3-Propandiol, n-Butylenglykol, n-Pentylglykol, n-Hexandiol, Diethylenglykol, 1,4-Cyclohexandimethanol, Tripropylenglykol und 1,10-Decandiol ist.

12. Ein-Komponentensystem nach einem der vorhergehenden Ansprüche,
**dadurch gekennzeichnet, dass**
der mindestens eine Malonsäureester ausgewählt ist aus Dimethylmalonat, Diethylmalonat, Diisopropylmalonat und Monoethylmalonat.

13. Ein-Komponentensystem nach Anspruch 12,
**dadurch gekennzeichnet, dass**
der Malonsäureester Diethylmalonat ist.

14. Ein-Komponentensystem nach einem der vorhergehenden Ansprüche,
**dadurch gekennzeichnet, dass**
das Di-/Polyamin ein Diamin ist und ausgewählt wird aus der Gruppe bestehend aus Isophorondiamin, 4,4'-Diaminodicyclohexylmethan, 4,4'-Methylenbis(2-methylcyclo-hexanamin), ein Gemisch von 2,2,4- und 2,4,4-Trimethyl-Hexamethylendiamin, Hexandiamin, 1,3-Bis(aminomethyl)cyclohexan und ein Polyoxypropylendiamin.

15. Verwendung eines Ein-Komponentensystems nach einem der vorhergehenden Ansprüche zur Herstellung von Kunstledern oder (Kunst)Lederbeschichtungen.

16. Verfahren zur Herstellung eines Ein-Komponentensystems nach einem der Ansprüche 1 - 14, bei dem mindestens ein Polyurethanprepolymer auf Basis ein Polyalkylenglykols mit einem zahlenmittleren Molekulargewicht von 900 bis 2.150 g/mol und ggf. weiterer Di- und/oder Polyole, bei dem alle nicht umgesetzten Isocyanatgruppen des Polyurethanprepolymers mit mindestens einem Malonsäureester blockiert sind, und mindestens ein Di- und/oder Polyamin miteinander vermischt werden.

17. Verfahren zur Herstellung eines Kunstleders, bei dem das Ein-Komponentensystem nach einem der Ansprüche 1 - 14 auf einen Träger aufgebracht, und thermisch gehärtet wird.

18. Verfahren zur Herstellung einer (Kunst)Lederbeschichtung, bei dem das Ein-Komponentensystem nach einem der Ansprüche 1 - 14 auf einem Stück Kunstleder oder Leder aufgebracht und thermisch gehärtet wird.
